(19) Europäisches Patentamt / European Patent Office / Office européen des brevets

(11) **EP 3 100 281 B1**

(12) **EUROPEAN PATENT SPECIFICATION**

(45) Date of publication and mention
of the grant of the patent:
**02.09.2020 Bulletin 2020/36**

(21) Application number: **15740628.1**

(22) Date of filing: **27.01.2015**

(51) Int Cl.:
*H01B 3/02* (2006.01)          *H01B 3/44* (2006.01)
*H01B 3/47* (2006.01)          *H01B 3/28* (2006.01)
*H01B 3/00* (2006.01)          *H01F 27/32* (2006.01)
*C08L 29/04* (2006.01)         *H01B 3/30* (2006.01)

(86) International application number:
**PCT/US2015/012983**

(87) International publication number:
**WO 2015/113013 (30.07.2015 Gazette 2015/30)**

(54) **ELECTRICALLY INSULATING MATERIAL AND CONDUCTOR WRAP FOR ELECTRICAL EQUIPMENT, SUCH AS TRANSFORMERS**

ELEKTRISCH ISOLIERENDES MATERIAL UND LEITFÄHIGE UMHÜLLUNG FÜR ELEKTRISCHE VORRICHTUNGEN WIE TRANSFORMATOREN

MATÉRIAU ÉLECTRIQUEMENT ISOLANT ET BANDE D'ENVELOPPEMENT DE CONDUCTEURS POUR ÉQUIPEMENTS ÉLECTRIQUES TELS QUE TRANSFORMATEURS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.01.2014 US 201461931792 P**
**21.01.2015 US 201562105780 P**

(43) Date of publication of application:
**07.12.2016 Bulletin 2016/49**

(73) Proprietor: **3M Innovative Properties Company**
**St. Paul, MN 55133-3427 (US)**

(72) Inventors:
• **TURPIN, Robert H.**
  **Saint Paul, Minnesota 55133-3427 (US)**
• **HUANG, Mitchell T.**
  **Saint Paul, Minnesota 55133-3427 (US)**
• **STANKES, David S.**
  **Saint Paul, Minnesota 55133-3427 (US)**

(74) Representative: **Mathys & Squire**
**Mathys & Squire Europe LLP**
**Theatinerstraße 7**
**80333 München (DE)**

(56) References cited:
WO-A1-03/104559          WO-A1-2012/082180
WO-A1-2015/031260        WO-A2-2007/140008
JP-A- S6 414 462         JP-A- 2003 095 754
US-A- 3 903 352          US-A- 3 903 352
US-A- 4 273 825          US-A- 5 368 929

**Description**

**TECHNICAL FIELD**

This invention relates to an electrically insulating material suitable for electrical insulation applications. In particular, this invention relates to an electrically insulating conductor wrap material suitable for transformers, such as liquid filled transformers.

**BACKGROUND**

Electrical equipment such as electric motors, generators, and transformers often require some form of dielectric insulation to isolate adjacent conductors.

A conventional insulating material is Kraft paper, which is a cellulose-based material that is often utilized in liquid filled transformers. However, cellulose paper suffers from several disadvantages such as high moisture absorption, water generation upon degradation, and limited thermal capabilities. Current liquid filled transformers require a moisture content of less than 0.5 wt% to operate reliably throughout its designed product lifetime. Water contamination in a liquid filled transformer results in reduced performance through increased electrical losses and electrical discharge activity. Because of its strong affinity for water (hygroscopic), cellulose paper forces liquid filled transformer manufacturers to spend extensive time and energy towards drying out these materials prior to final assembly into a liquid filled transformer. The presence of moisture can further accelerate cellulose degradation and results in additional release of water as a degradation product.

The other main shortcoming of cellulose paper is its limited thermal stability. Standard Kraft paper has a thermal class of 105°C and thermally upgraded Kraft has a thermal class of 120°C. The maximum operating temperature of the liquid filled transformer insulated with Kraft paper is limited by the thermal capabilities of the Kraft paper.

**SUMMARY**

There is a need in certain electrical insulation applications for materials with lower moisture absorption and higher thermal stability that achieve suitable performance in electrical equipment applications.

The materials of the present invention are suitable for insulating electrical components in transformers, motors, generators, and other devices requiring insulation of electrical components. In particular, such materials are suitable as insulating conductor wrap for liquid filled transformers and other liquid filled electrical components. In one aspect, such materials can be utilized as conductor wrap for liquid filled transformers.

At least some embodiments of the present invention provide an insulation article having lower moisture absorption. At least some embodiments of the present invention provide an electrically insulating saturated nonwoven sheet material having desirable thermal stability when compared to conventional cellulose-based Kraft paper.

At least one embodiment of the present invention provides an article comprising an inorganic filler, fully hydrolyzed polyvinyl alcohol fibers, and a polymer binder. In another aspect, the article is formed as a saturated nonwoven sheet. In another aspect, the article can further include binder fibers that are resistant to hot oil. For example, the article can include polyphenylene sulfide (PPS) binder fibers.

In another aspect, the inorganic filler comprises at least one of kaolin clay, talc, mica, calcium carbonate, silica, alumina, alumina trihydrate, montmorillonite, smectite, bentonite, illite, chlorite, sepiolite, attapulgite, halloysite, vermiculite, laponite, rectorite, perlite, aluminum nitride, silicon carbide, boron nitride, and combinations thereof.

In another aspect, the inorganic filler comprises kaolin clay. In a further aspect, the kaolin clay comprises at least one of water-washed kaolin clay, delaminated kaolin clay, calcined kaolin clay, and surface-treated kaolin clay.

In another aspect, the polymer binder comprises a latex-based material. In a further aspect, the polymer binder comprises at least one of acrylic, nitrile, and styrene acrylic latex.

In another aspect, the article comprises from about 20% to about 50% fully hydrolyzed polyvinyl alcohol fibers. In a further aspect, the article comprises from about 40% to about 60% kaolin clay, and from about 5% to about 30% polymer binder. In another aspect, the article further comprises from about 0 % to about 20% PPS binder fibers. The percentages are by weight.

The article is substantially cellulose free.

In another aspect, the article is non-hygroscopic.

Another embodiment of the present invention provides an insulating conductor wrap for electrical equipment, wherein the insulating conductor wrap comprises the aforementioned article. The electrical equipment comprises one of a transformer, a motor, and a generator. In one aspect, the electrical equipment comprises a liquid filled transformer.

Another embodiment of the present invention provides an oil filled transformer comprising electrically insulating conductor wrap having fully hydrolyzed polyvinyl alcohol fibers. In another aspect, the electrically insulating conductor wrap further comprises an inorganic filler and a polymer binder. In a further aspect, the oil filled transformer comprises about 20% to about 50% fully hydrolyzed polyvinyl alcohol fibers, from about 40% to about 60% kaolin clay and from about 5% to about 30% polymer binder, wherein the percentages are by weight. In a further aspect, the electrical insulating saturated nonwoven material is substantially cellulose free.

As used in this specification:

"substantially cellulose free" means containing less than 10 wt% cellulose-based material, preferably containing less than 5 wt% cellulose-based material, more preferably containing only trace amounts of cellulose-based material, and most preferably containing no cellulose-based material.

"non-hygroscopic" means containing less than 5 wt% water content at a relative humidity of 50%, more preferably containing less than 1.5 wt% water content at a relative humidity of 50%, and even more preferably less than 1 wt% water content at a relative humidity of 50%.

The above summary of the present invention is not intended to describe each disclosed embodiment or every implementation of the present invention. The detailed description that follows below more specifically illustrates embodiments of the invention.

## BRIEF DESCRIPTION OF THE DRAWINGS

The invention will be described hereinafter in part by reference to non-limiting examples thereof and with reference to the drawings, in which:

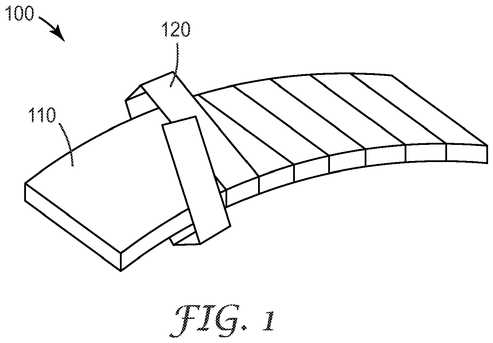

Fig. 1 is schematic diagram of a wrapped conductor having a conductor wrap comprising a saturated nonwoven sheet according to an aspect of the invention.

## DETAILED DESCRIPTION

In the following description, it is to be understood that other embodiments are contemplated and may be made without departing from the scope of the present invention. The following detailed description, therefore, is not to be taken in a limiting sense.

Unless otherwise indicated, all numbers expressing feature sizes, amounts, and physical properties used in the specification and claims are to be understood as being modified in all instances by the term "about." Accordingly, unless indicated to the contrary, the numerical parameters set forth in the present specification and attached claims are approximations that can vary depending upon the desired properties sought to be obtained by those skilled in the art utilizing the teachings disclosed herein. The use of numerical ranges by endpoints includes all numbers and any value within that range (e.g., 1 to 5 includes 1, 1.5, 2, 2.75, 3, 3.80, 4, and 5).

At least one embodiment of the present invention provides an article comprising fully hydrolyzed polyvinyl alcohol fibers, an inorganic filler, and a polymer binder. The article can be formed as an insulating saturated nonwoven sheet for electrical equipment, such as transformers, motors, generators. Electrical equipment is sometimes filled with an insulating (dielectric) liquid or fluid. Typical fluids used in liquid filled electrical equipment can include mineral oil, natural ester oils, synthetic ester oils, silicone oils, and the like. The article can be formed as an insulating saturated nonwoven sheet for liquid filled electrical equipment, such as liquid filled transformers, liquid filled cable, and liquid filled switchgear. As a result, the liquid-filled electrical equipment can be substantially cellulose free.

At least some embodiments of the present invention provide an electrically insulating conductor wrap having decreased moisture absorption, higher thermal stability and higher thermal conductivity as compared to conventional cellulose-based Kraft paper.

At least some of the embodiments provide an insulating material that can be formed using a carding process then saturated with a coating. Thus, the insulating saturated sheet can have acceptable thickness/thinness, strength, flexibility, and elongation for electrical equipment applications.

Although cellulose-based Kraft paper (which is described e.g. in US3903352A) has been used in the liquid filled transformer industry for many years, the high moisture absorption, susceptibility to hydrolysis, and limited high temperature capabilities are known disadvantages. By omitting cellulose and instead using fully hydrolyzed polyvinyl alcohol fibers, more particularly a combination of an inorganic filler, such as kaolin clay, and fully hydrolyzed polyvinyl alcohol fibers in the article, an electrically insulating saturated nonwoven sheet with lower moisture absorption, higher thermal stability, and higher thermal conductivity has been demonstrated as compared to standard Kraft paper.

The article and electrically insulating material described herein can provide a transformer manufacturer with the ability to reduce current extensive time and energy-consuming dry out cycles that are typically performed to dry out a transformer unit insulated with traditional Kraft paper prior to oil impregnation. These dry out cycles may last from between 12 hours to several days depending on design and size of unit. Further, not only is Kraft cellulose paper hygroscopic, the aging and actual degradation of cellulose generates water as a by-product which can further reduce the insulation qualities of the transformer oil.

As mentioned above, the electrically insulating saturated nonwoven material comprises polyvinyl alcohol (PVOH) fibers. In one example, the electrically insulating saturated nonwoven material comprises from about 20% to about 50% fully hydrolyzed polyvinyl alcohol fibers by weight. By fully hydrolyzed, it is meant that the fibers contain less than 5% unhydrolyzed vinyl acetate units and therefore have a degree of hydrolysis of at least 95%. Fully hydrolyzed polyvinyl alcohol typically has a melting point ranging between 230°C-245 °C. More preferably, the fully hydrolyzed fibers possess high tenacity (> 6g/denier). Fully hydrolyzed, high tenacity polyvinyl alcohol fibers are typically insoluble in water at room temperature. In contrast, polyvinyl alcohol fibers with a low degree of hydrolysis typically have a melting point ranging from 180-190°C and are soluble in water at room temperature. These partially hydrolyzed PVOH fibers are usually used as binder fibers.

In addition, the electrically insulating saturated nonwoven sheet comprises an inorganic filler. In one aspect, suitable inorganic fillers include, but are not limited to, kaolin clay, talc, mica, calcium carbonate, silica, alumina, alumina trihydrate, montmorillonite, smectite, bentonite, illite, chlorite, sepiolite, attapulgite, halloysite, vermiculite, laponite, rectorite, perlite, aluminum nitride, silicon carbide, boron nitride, and combinations thereof. The inorganic filler may also be surface treated. Suitable types of kaolin clay include, but are not limited to, water-washed kaolin clay; delaminated kaolin clay; calcined kaolin clay; and surface-treated kaolin clay. In one example, the electrically insulating material comprises from about 0% to about 60% kaolin clay by weight. More preferably, the electrically insulating material comprises from about 40% to about 60% kaolin clay by weight.

In addition, the electrically insulating saturated nonwoven sheet comprises a polymer binder. A suitable polymer binder may include a latex-based material. In another aspect, suitable polymer binders can include, but are not limited to, acrylic latex, nitrile latex, styrene acrylic latex, and natural rubber latex. In one example, the electrically insulating material comprises from about 5% to about 30% polymer binder by weight. In some preferable embodiments, the electrically insulating material comprises from about 5% to about 20% polymer binder by weight.

Optionally, the electrically insulating material may further comprise an additional fiber. In some embodiments, the additional fiber comprises an amorphous, undrawn fiber. In one example, the additional fiber comprises a binder fiber resistant to hot oil. In some embodiments, the electrically insulating materials comprise polyphenylene sulfide (PPS) fiber. In further aspects, the electrically insulating materials comprise bicomponent fibers such as PPS/polyethylene terephthalate (PET) bicomponent fibers. In one example, the electrically insulating material comprises from about 0% to about 30% PPS fiber by weight. In other embodiments, the electrically insulating material comprises from about 0% to about 20% PPS fiber by weight.

In many of the embodiments, the electrically insulating material is formed as a saturated nonwoven sheet or mat. In one aspect, a carded polyvinyl alcohol fiber based nonwoven material is subsequently saturated with a slurry coating that includes an inorganic filler and a latex binder. In another aspect, a carded nonwoven mat comprising a combination of polyvinyl alcohol fibers and PPS fibers is subsequently saturated with a slurry coating that comprises an inorganic filler and a latex binder. Using a carding/saturation process allows the resulting sheet to be thin (e.g. less than 5 mils (0.13 mm), in some aspects about 2 - 3 mils (0.05-0.08 mm)). The carding and coating steps can be performed using conventional processes. In one example process, chopped polyvinyl alcohol fibers are conveyed to a blower, then to a carding machine which combs the fibers into a nonwoven mat or batting. The mat is then calendered with heat (e.g., using thermal bonding) to provide strength. Other conventional nonwoven forming processes can also be employed. In further examples, a slurry comprising inorganic clay in a polymer latex is then applied to the nonwoven mat using conventional coating techniques such as with a wire-wound rods (e.g., Meyer rods) or curtain coating.

In an alternative aspect, a nonwoven, non-hygroscopic insulating material can comprise an inorganic filler, fully hydrolyzed polyvinyl alcohol fibers, a polymer binder, and additionally, high surface area fibers. This material can be prepared using a wet-laid process, such as is described in U.S. Provisional Patent Application No. 61/931 ,792.

The result is a nonwoven, non-hygroscopic insulating material suitable for use in electrical equipment. In some aspects, the nonwoven, non-hygroscopic insulating material can be utilized as conductor wrapping within a liquid filled transformer. The electrically insulating material is resistant to high temperature fluids, including high temperature oil.

For example, Fig. 1 shows another aspect of the present invention, an insulating conductor wrap suitable for use in electrical equipment, such as a liquid filled transformer. In one exemplary aspect, the transformer comprises an oil filled transformer.

In Fig. 1, a wrapped conductor 100 includes a conductor, such as rectangular conductor 110, wrapped by a sheet 120. Conductor 110 can comprise any conventional conductor material. The conductor 110 is electrically isolated from adjacent conductors by sheet 120, which is wrapped around the conductor 110. Sheet 120 can comprise the saturated nonwoven sheet described above. The wrapped conductor 100 can then be utilized in liquid (e.g., oil) filled distribution or power transformers. Further, one or more of additional transformer components may also be formed from the electrically insulating material described herein, as would be understood by one of skill in the art given the present description.

By utilizing the electrically insulating material described herein, transformers can be approved for a higher operating class, and can be designed to meet, e.g., IEEE Std. C57.154-2012.

As shown in the examples below, the removal of cellulose and cellulose-based transformer components can lead to much shorter dry out times. In addition, the transformers themselves can be less susceptible to water degradation.

## EXAMPLES

The following examples and comparative examples are offered to aid in the understanding of the present invention and are not to be construed as limiting the scope thereof. Unless otherwise indicated, all parts and percentages are by weight. The following test methods and protocols were employed in the evaluation of the illustrative and comparative examples that follow.

## Sample Preparation

The exemplary electrically insulating saturated nonwoven materials were made using methods known in the art, as follows:

The carded nonwoven mats used to prepare Examples 1-10 utilized a mixture of the fibers shown in Table 1. Compositions of each mat in percentage by weight (wt%) are provided in Table 2. The fiber mixtures were passed through a carding machine to yield nonwoven battings with basis weights shown in Table 2. Each nonwoven batting was then calendered through a steel cotton nip at a line speed of 32 feet/min (9.8 m/min), with the steel roll heated to a temperature of approximately 300°F (149 °C) and a nip pressure around 800 pli (143 kg/cm). Example 10 was calendered through 2 steel cotton nips at a line speed of 75 feet/min (22.9 m/min), with the steel roll heated to a temperature of approximately 410°F (210°C) and a nip pressure around 800 pli (143 kg/cm).

Carded nonwoven battings (Examples 1-9) were further calendered through a steel-steel nip at approximately the temperatures provided in Table 2 and a nip pressure of about 1000 pli (179 kg/cm) to provide a partially bonded nonwoven material, which was then saturated with a slurry of clay dispersed in a polymer latex binder. Either a butadiene acrylonitrile (BAN) latex (Emerald Performance Materials, USA) or an acrylic latex (HYCAR 26362, Lubrizol Corp) was used as the binder, and delaminated kaolin clay (HYDRAPRINT from KaMin, LLC, USA) was used as the clay, as indicated in Table 2. The final thickness (caliper) and basis weight of each example is provided in Table 3.

**Table 1.**

|   | Fiber Description | Denier | Length, mm | Fiber tenacity (g/ denier) | Product Name / Source |
|---|---|---|---|---|---|
| A | Fully Hydrolyzed PVOH | 1.5 | 38 | 12.5 | KURALON EQ2, Kururay, Japan |
| B | Fully Hydrolyzed PVOH | 1.4 | 38 | 10.5 | Minifibers, USA |
| C | PPS/PET Bicomponent | 3 | 38 | 4 | Fiber Innovation Technology, USA |
| D | PPS, Undrawn Binder | 2.7 | 50 | 1.4 | NEXYLENE S970, EMS-GRILTECH, Switzerland |
| E | Fully Hydrolyzed PVOH | 1.5 | 51 | 13 | Minifibers, USA |

**Table 2.**

|   | Fiber Composition (wt%) | Basis Weight of Batting (g/m$^2$) | Steel-Steel Calender Roll Temperature | Slurry |
|---|---|---|---|---|
| Ex. 1 | 100% B | 26 | 400°F (204°C) | 100/20 clay/butadiene acrylonitrile latex |

(continued)

|  | Fiber Composition (wt%) | Basis Weight of Batting (g/m²) | Steel-Steel Calender Roll Temperature | Slurry |
|---|---|---|---|---|
| Ex. 2 | 100% B | 26 | 400°F (204°C) | 100/40 clay/butadiene acrylonitrile latex |
| Ex. 3 | 100% B | 26 | 400°F (204°C) | 100/60 clay/butadiene acrylonitrile latex |
| Ex. 4 | 100% A | 25 | 400°F (204°C) | 100/60 clay/acrylic latex |
| Ex. 5 | 100% B | 26 | 400°F (204°C) | 100/60 clay/acrylic latex |
| Ex. 6 | 75% B + 25% C | 27 | 400°F (204°C) | 100/60 clay/acrylic latex |
| Ex. 7 | 25% D + 75% E | 40 | 385°F (196°C) | 100/30 clay/butadiene acrylonitrile latex |
| Ex. 8 | 25% D + 75% E | 40 | 405°F (207°C) | 100/30 clay/butadiene acrylonitrile latex |
| Ex. 9 | 100% E | 40 | 405°F (207°C) | 100/30 clay/butadiene acrylonitrile latex |
| Ex. 10 | 80%E + 20%D | 36 | NA | 100/30 clay/acrylic latex |

**Table 3.**

|  | Final Basis Weight | | Thickness | |
|---|---|---|---|---|
|  | g/yd² | g/m² | mil | μm |
| Ex. 1 | 53 | 63 | 2.1 | 53 |
| Ex. 2 | 51 | 61 | 2.1 | 53 |
| Ex. 3 | 52 | 62 | 2.2 | 56 |
| Ex. 4 | 64 | 77 | 2.6 | 66 |
| Ex. 5 | 54 | 65 | 2.3 | 58 |
| Ex. 6 | 60 | 72 | 2.6 | 66 |
| Ex. 7 | 96 | 115 | 3.9 | 99 |
| Ex. 8 | 82 | 98 | 4.0 | 102 |
| Ex. 9 | 62 | 74 | 2.7 | 69 |
| Ex.10 | 72 | 86 | 3.1 | 79 |

Comparative examples CE1 and CE2 were commercially available thermally upgraded cellulose-based Kraft paper that were used as received. The thickness of CE 1 was 10 mil (254 microns [μm]) and CE2 had a thickness of 3 mil (76 μm). Thermally upgraded Kraft paper is chemically modified to reduce the rate at which the paper decomposes.

**Test Methodologies**

Machine Direction (MD) tensile strength and MD elongation were measured according to the procedures set forth in ASTM D-828-97 (2002), "Standard Test Method for Tensile Properties of Paper and Paperboard Using Constant-Rate-of-Elongation Apparatus." Specimens of each sample were tested for initial tensile properties, then aged in mineral oil at 170°C for various lengths of time. Tensile properties were again measured, and the retained elongation and tensile strength were calculated as a percentage of the initial measurement before aging.

Oil compatibility was evaluated by aging the solid insulation in mineral oil for 168 hours at 100°C and then measuring the dissipation factor of the mineral oil as described in ASTM D-924(2008), "Standard Test Method for Dissipation Factor (or Power Factor) and Relative Permittivity of Electrical Insulating Liquids)

Thermal conductivity of the samples was measured using a modified ASTM D5470-06 Heat Flow Meter according to the following procedure. The hot and cold meter bars, 2 in. (5 cm) in diameter and approximately 3 in. (7.6 cm) long, were instrumented with six evenly-spaced thermocouples, the first of which was 5.0 mm away from the interface between the bars. The bars were constructed from brass, with a reference thermal conductivity of 130 W/m-K. The contacting faces of the meter bars were parallel to within about 5 microns, and the force on the sample during testing was approximately 120N. The thickness of the sample was measured during testing by a digital displacement transducer with a nominal accuracy of 2 microns.

When the meter bars reached equilibrium, the digital displacement transducer was zeroed. The saturated nonwoven material samples were submersed into insulation oil within a glass jar and then deaerated under vacuum in a vacuum oven at room temperature (25°C). The oil saturated samples were removed from the oil and placed onto the bottom meter bar. The oil served as the interfacial fluid to eliminate thermal contact resistance. The meter bars were closed and the normal force applied. Measurements of the heat flow through the meter bars, and the thickness of the sample were made throughout the duration of the test, typically about 30 minutes. Equilibrium was generally reached within about 10 minutes.

The thermal conductivity of the sample, k, was then calculated from the thickness of the sample (L), the thermal conductivity of the meter bars ($k_m$), the temperature gradient in the meter bars (dT/dx), and the extrapolated temperature difference across the sample ($T_u$ - $T_l$).

$$k = \frac{k_m(dT/dx)}{(T_u - T_l) / L}$$

Dielectric strength was measured according to ASTM D149-09 "Standard Test Method for Dielectric Breakdown Voltage and Dielectric Breakdown Strength of Solid Electrical Insulating Materials at Commercial Power Frequencies."

**Results**

Tables 4-6 show retained tensile strengths and % elongation of the electrically insulating saturated nonwoven materials and the thermally upgraded Kraft paper (CE1) as a function of aging time in mineral oil at 170°C.

Despite their thinness, Examples 1-10 all showed tensile strengths high enough within the target range of approximately 24 lb/inch (4.2 N/mm). As shown in Table 4, Examples 1-3 all showed retained tensile strengths of greater than 50% after 12 weeks aging in mineral oil at 170°C. Satisfactory oil compatibility results were obtained when dissipation factor of the mineral oil aged with Example 10 at 100°C was measured. CE1, in contrast, lost nearly all of its MD tensile strength, retaining only 3% of its unaged tensile strength after 12 weeks aging in 170°C oil. In addition, the oil in which CE1 was aged for 12 weeks was also noticeably darker and cloudier than the oil from Examples 1-3, indicating the presence of degradation products from the Kraft paper.

Examples 1-10 all demonstrated an elongation greater than 5%, the typical minimum requirement for conductor wrap applications. (See Tables 5-6.) CE1 shows an elongation of only 2.3%. It should be noted that typically, moisture needs to be added to Kraft paper to increase its elongation to about 5%.

**Table 4.**

| Ex. | MD Tensile Strength, lb/in (N/mm) | | | | MD Tensile Strength, % Retained | | |
|---|---|---|---|---|---|---|---|
| | initial | 3 weeks | 6 weeks | 12 weeks | 3 weeks | 6 weeks | 12 weeks |
| 1 | 19.2 (3.36) | 23.6 (4.13) | 21.5 (3.77) | 18.6 (3.26) | 123% | 112% | 97% |
| 2 | 27.3 (4.78) | 28.1 (4.92) | 26.3 (4.61) | 19.5 (3.41) | 103% | 96% | 70% |
| 3 | 33.9 (5.94) | 28.1 (4.92) | 24.7 (4.33) | 20.4 (3.57) | 83% | 73% | 60% |
| CE1 | 174 (30.5) | | | 6 (1.05) | | | 3% |

**Table 5.**

| Ex. | MD Elongation, % | | | | MD Elongation, % Retained | | |
|-----|---------|---------|---------|----------|---------|---------|----------|
|     | initial | 3 weeks | 6 weeks | 12 weeks | 3 weeks | 6 weeks | 12 weeks |
| 1   | 9.2  | 9.6  | 6.9 | 5.4 | 104% | 75% | 59% |
| 2   | 11.7 | 10.5 | 7.1 | 3.1 | 90%  | 61% | 26% |
| 3   | 13.6 | 11.5 | 5.7 | 4   | 85%  | 42% | 29% |
| CE1 | 2.3  |      |     | 0.5 |      |     | 22% |

**Table 6.**

|   | Ex. 4 | Ex. 5 | Ex. 6 | Ex. 7 | Ex. 8 | Ex. 9 | Ex. 10 |
|---|-------|-------|-------|-------|-------|-------|--------|
| Initial MD Tensile Strength, lb/in (N/mm) | 23.5 (4.12) | 25 (4.38) | 26.2 (4.59) | 31.4 (5.50) | 26.5 (4.64) | 18.3 (3.20) | 39 (6.83) |
| MD Tensile Strength, aged 20 days in 170°C mineral oil, lb/in (N/mm) | 24.8 (4.34) | 24.7 (4.33) | 24.1 (4.22) | 31 (5.43) | 31 (5.43) |  | 37.9 (6.64) |
| % Retained Tensile Strength | 106% | 99% | 92% | 99% | 117% |  | 97% |
| MD Elongation | 10.7 | 12.2 | 10.4 | 9.1 | 6.7 | 8.8 | 7.0 |
| MD Elongation, aged 20 days in 170°C mineral oil | 8.8 | 6.2 | 5.4 | 7 | 8 |  | 6.9 |
| % Retained Elongation | 82 | 51 | 52 | 77 | 119 |  | 99 |

The lower moisture absorption of Example 10 compared to CE1 and CE2 at 50% relative humidity (RH) and 95% RH are evident from the results shown in Table 7.

**Table 7.**

|         | WATER CONTENT | | |
|---------|--------|------|------|
|         | Ex. 10 | CE1  | CE2  |
| 50% RH  | 1.2%   | 6.4% | 5.9% |
| 95% RH  | 2.6%   | 27%  |      |

As shown in Table 8, Example 10 has a higher thermal conductivity as compared to CE1 and CE2, and the dielectric strength of Example 10 in both air and mineral oil is higher than CE1.

**Table 8.**

|   | Ex.10 | CE1 | CE2 |
|---|-------|-----|-----|
| Thermal Conductivity in Mineral Oil, W/m-K | 0.278 | 0.240 | 0.259 |
| Dielectric Strength in Mineral Oil, Volt/mil (kV/m) | 1630 ($64.2 \times 10^3$) | 1450 ($57.1 \times 10^3$) |  |
| Dielectric Strength in Air, Volt/mil (kV/m) | 300 ($11.8 \times 10^3$) | 232 ($9.13 \times 10^3$) |  |

**Claims**

1.  An article comprising:

    20 % to 50 % fully hydrolyzed polyvinyl alcohol fibers, wherein the percentages are by weight;

an inorganic filler; and
a polymer binder,
wherein the article is an electrically insulating saturated nonwoven sheet that is substantially cellulose free.

2. The article of claim 1 formed as a nonwoven sheet.

3. The article of claim 1 wherein inorganic filler comprises kaolin clay.

4. The article of claim 1, wherein the polymer binder comprises at least one of acrylic, nitrile, and styrene acrylic latex.

5. The article of claim 1, further comprising a binder fiber resistant to hot oil.

6. The article of claim 5, wherein the binder fiber comprises polyphenylene sulfide fiber.

7. The article of claim 1 comprising:

   from 40% to 60% kaolin clay;
   from 5% to 20% polymer binder; and
   from 0% to 20% polyphenylene sulfide fiber,
   wherein the percentages are by weight.

8. The article of claim 1 wherein the article is non-hygroscopic.

9. Electrical equipment comprising conductor wrapped by the article of claim 1.

10. The electrical equipment of claim 9 comprising one of a transformer, a motor, and a generator.

11. An oil filled transformer comprising an electrically insulating material comprising the article of claim 1.

12. The oil filled transformer of claim 11, wherein the electrical insulating material further comprises an inorganic filler and a polymer binder.

13. The oil filled transformer of claim 12, wherein the electrical insulating material further comprises 20% to 50% fully hydrolyzed polyvinyl alcohol fibers, from 40% to 60% kaolin clay, from 5% to 20% polymer binder, and from 0% to 20% polyphenylene sulfide fiber, wherein the percentages are by weight.

14. The oil filled transformer of claim 13, wherein the electrical insulating material is substantially cellulose free.

**Patentansprüche**

1. Artikel, umfassend:

   20 % bis 50 % vollständig hydrolysierte Polyvinylalkoholfasern, wobei die Prozentsätze auf das Gewicht bezogen sind;
   einen anorganischen Füllstoff; und
   ein Polymerbindemittel,
   wobei der Artikel ein elektrisch isolierendes, gesättigtes Vliesstoffblatt ist, das im Wesentlichen zellulosefrei ist.

2. Artikel nach Anspruch 1, der als ein Vliesstoffblatt gebildet wurde.

3. Artikel nach Anspruch 1, wobei der anorganische Füllstoff Kaolinton umfasst.

4. Artikel nach Anspruch 1, wobei das Polymerbindemittel mindestens eines aus Acryl-, Nitril- und Styrolacryllatex umfasst.

5. Artikel nach Anspruch 1, ferner umfassend eine gegen heißes Öl beständige Bindefaser.

**6.** Artikel nach Anspruch 5, wobei die Bindefaser eine Polyphenylensulfidfaser umfasst.

**7.** Artikel nach Anspruch 1, umfassend:

von 40 % bis 60 % Kaolinton;
von 5 % bis 20 % Polymerbindemittel; und
von 0 % bis 20 % Polyphenylensulfidfaser, wobei die Prozentsätze auf das Gewicht bezogen sind.

**8.** Artikel nach Anspruch 1, wobei der Artikel nicht hygroskopisch ist.

**9.** Elektrische Ausrüstung, umfassend einen mit dem Artikel nach Anspruch 1 umwickelten Leiter.

**10.** Elektrische Ausrüstung nach Anspruch 9, umfassend einen von einem Transformator, einem Motor und einem Generator.

**11.** Ölgefüllter Transformator, umfassend ein elektrisch isolierendes Material, umfassend den Artikel nach Anspruch 1.

**12.** Ölgefüllter Transformator nach Anspruch 11, wobei das elektrisch isolierende Material ferner einen anorganischen Füllstoff und ein Polymerbindemittel umfasst.

**13.** Ölgefüllter Transformator nach Anspruch 12, wobei das elektrisch isolierende Material ferner 20 % bis 50 % vollständig hydrolysierte Polyvinylalkoholfasern, von 40 % bis 60 % Kaolinton, von 5 % bis 20 % Polymerbindemittel und von 0 % bis 20 % Polyphenylensulfidfaser umfasst, wobei die Prozentsätze auf das Gewicht bezogen sind.

**14.** Ölgefüllter Transformator nach Anspruch 13, wobei das elektrisch isolierende Material im Wesentlichen zellulosefrei ist.


**Revendications**

**1.** Article comprenant :

20 % à 50 % de fibres d'alcool polyvinylique entièrement hydrolysé, les pourcentages étant exprimés en poids ;
une charge inorganique ; et
un liant polymère,
dans lequel l'article est une feuille non tissée saturée électriquement isolante qui est sensiblement exempte de cellulose.

**2.** Article selon la revendication 1, formé comme une feuille non tissée.

**3.** Article selon la revendication 1, dans lequel la charge inorganique comprend une argile kaolin.

**4.** Article selon la revendication 1, dans lequel le liant polymère comprend au moins un élément parmi un latex acrylique, un latex nitrile et un latex styrène acrylique.

**5.** Article selon la revendication 1, comprenant en outre une fibre liante résistante à l'huile chaude.

**6.** Article selon la revendication 5, dans lequel la fibre liante comprend une fibre de sulfure de polyphénylène.

**7.** Article selon la revendication 1, comprenant :

de 40 % à 60 % d'argile kaolin ;
de 5 % à 20 % de liant polymère ; et
de 0 % à 20 % de fibre de sulfure de polyphénylène,
dans lequel les pourcentages sont exprimés en poids.

**8.** Article selon la revendication 1, dans lequel l'article est non hygroscopique.

**9.** Équipement électrique comprenant un conducteur enveloppé par l'article selon la revendication 1.

**10.** Équipement électrique selon la revendication 9, comprenant l'un d'un transformateur, d'un moteur et d'un générateur.

**11.** Transformateur rempli d'huile comprenant un matériau électriquement isolant comprenant l'article selon la revendication 1.

**12.** Transformateur rempli d'huile selon la revendication 11, dans lequel le matériau isolant électrique comprend en outre une charge inorganique et un liant polymère.

**13.** Transformateur rempli d'huile selon la revendication 12, dans lequel le matériau d'isolation électrique comprend en outre 20 % à 50 % de fibres d'alcool polyvinylique entièrement hydrolysé, de 40 % à 60 % d'argile kaolin, de 5 % à 20 % de liant polymère et de 0 % à 20 % de fibre de sulfure de polyphénylène, dans lequel les pourcentages sont exprimés en poids.

**14.** Transformateur rempli d'huile selon la revendication 13, dans lequel le matériau isolant électrique est sensiblement exempt de cellulose.

*FIG. 1*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3903352 A

- US 61931792 A